# FASCICULE DE BREVET EUROPEEN

(11) **EP 3 152 181 B1**
(45) Date de publication et mention de la délivrance du brevet: **18.04.2018**
(21) Numéro de dépôt: 15733795.7
(22) Date de dépôt: 04.06.2015
(51) Int. Cl.: C04B 28/02, C04B 28/04, C04B 28/14, C04B 38/10

(54) **PROCEDE DE FABRICATION D'UNE MOUSSE MINERALE ULTRA-LEGERE**
VERFAHREN ZUR HERSTELLUNG EINES ULTRALEICHTEN MINERALSCHAUMS
METHOD FOR PRODUCING ULTRA-LIGHT MINERAL FOAM

(30) Priorité: 06.06.2014 FR 1455172
(43) Date de publication de la demande: 12.04.2017
(73) Titulaire: Lafarge, 75116 Paris (FR)
(72) Inventeur: LOMBOIS-BURGER, Hélène, F-38291 Saint Quentin Fallavier (FR); BLACHIER, Christian, F-38291 Saint Quentin Fallavier (FR); DUCHAND, Sylvain, F-38291 Saint Quentin Fallavier (FR); ROY, Cédric, F-38291 Saint Quentin Fallavier (FR)
(74) Mandataire: Regimbeau
(86) Numéro de dépôt international: PCT/FR2015/051477
(87) Numéro de publication internationale: WO 2015/185866

(56) Documents cités:
- WO-A2-2009/064929
- WO-A2-2012/069024
- FR-A1- 2 955 790
- US-A- 5 696 174

## Description

La présente invention se rapporte à un procédé de réalisation d'une mousse minérale ultralégère. De manière générale, la mousse minérale, en particulier la mousse de ciment, est très avantageuse pour de nombreuses applications en raison de ses propriétés comme l'isolation thermique, l'acoustique, la durabilité, la résistance au feu et ses facilités de mise en oeuvre.

La mousse minérale désigne un matériau sous forme d'une mousse. Ce matériau est plus léger que le béton traditionnel à cause des pores ou espaces vides qu'il comprend. Ces pores ou espaces vides sont dus à la présence d'air dans la mousse minérale et peuvent se présenter sous forme de bulles. Par mousse ultralégère, on entend une mousse dont la densité à l'état sec est généralement comprise de 30 à 300 kg/m³.

Lorsqu'un élément en mousse minérale est coulé, celui-ci peut s'affaisser par manque de stabilité de la mousse minérale par exemple, dès sa mise en place ou encore avant son durcissement complet. Ces problèmes d'affaissement de la mousse peuvent être dus à des phénomènes de coalescence, de mûrissement d'Ostwald, de pression hydrostatique ou de drainage, celui-ci étant accru notamment pour des éléments de grande hauteur.

La difficulté dans la réalisation des mousses minérales est donc de fabriquer une mousse stable palliant ces problèmes d'affaissement. Or, les techniques connues pour permettre d'obtenir une mousse suffisamment stable font appel à des mélanges de composés cimentaires comprenant de nombreux additifs et dont la réalisation est difficile et couteuse.

Ainsi il a déjà été proposé dans le brevet US 5,696,174 l'utilisation simultanée de composés cationiques (I) et anioniques (II) pour la réalisation de mousses. De telles mousses cimentaires comprennent du stéarate d'ammonium comme composé anionique et un composé cationique dénommé Arquad T.

La demande WO 2013/150148 décrit des mousses à base de ciment comprenant divers adjuvants. Ces mousses peuvent comprendre de l'aluminate de calcium pour permettre une prise rapide ou des particules minérales fines.

La demande WO 2012/ 069024 décrit un procédé de fabrication d'une mousse minérale par mélange d'un coulis de ciment comprenant une quantité de Na2O avec une mousse aqueuse.

Afin de répondre aux exigences des utilisateurs, il est devenu nécessaire de trouver un moyen pour réaliser une mousse minérale ultralégère, à haute stabilité dont la réalisation est simple et peu onéreuse.

Aussi le problème que se propose de résoudre l'invention est de trouver une formulation de mousse minérale ultra légère stable, qui ne s'affaisse pas lorsque la mousse est coulée en vertical et dont la réalisation soit relativement aisée et peu onéreuse.

L'invention se rapporte à un procédé de fabrication d'une mousse minérale comprenant les étapes suivantes :
(i) préparer indépendamment un coulis de ciment et une mousse aqueuse, le coulis de ciment étant préparé par mélange d'eau E et de ciment C, le ciment C comprenant une quantité x de Na₂O équivalent solubles, x exprimé en masse pour 100 parts de ciment, ledit coulis présentant un rapport x / (E/C) inférieur ou égal à 1,75, avec E/C exprimé en masse, et les particules du ciment C présentent une distribution granulométrique telle que le rapport d_{max(h/2)}/d_{mm(h/2)} de la distribution de taille des particules est compris de 5 à 25 ;
(ii) mettre en contact le coulis de ciment avec la mousse aqueuse pour obtenir un coulis de ciment moussé ; et
(iii) mettre en forme le coulis de ciment moussé obtenu à l'étape (ii) et laisser la prise s'effectuer.

La quantité Na₂O équivalent solubles, ou taux d'alcalins, du coulis de ciment est donc de manière surprenante une caractéristique importante dans la fabrication d'une mousse minérale stable. Ici, l'expression « taux d'alcalins » est utilisée pour désigner la proportion massique de Na₂O équivalent solubles, c'est-à-dire d'ions sodium et potassium solubles ((M_{Na2O} / M_{K2O)*} K₂O+Na₂O)= Na₂O_{eq} dans le ciment utilisé dans la mise en oeuvre du procédé selon l'invention, avec M étant la masse molaire des composés portés en indice. Les taux de K₂O et Na₂O sont mesurés par spectrométrie d'émission atomique, méthode dénommée ICP-AES après dissolution, décrite ci-dessous.

Ce ciment C est mis en présence d'une quantité d'eau E donnée dans le coulis, caractérisée par le rapport massique E/C. La valeur limite en termes d'alcalins pour permettre la stabilité de la mousse minérale finale est caractérisée par le ratio x / (E/C) qui ne doit pas excéder 1,75, x étant la quantité de Na₂O équivalent solubles (Na₂Oeq) en masse pour 100 parts de ciment.

De manière avantageuse le rapport massique x / (E/C) est inférieur ou égal à 1,60 de préférence inférieur ou égal à 1,50.

De préférence le rapport massique x / (E/C) est compris de 0,1 à 1,75.

Pour mettre en oeuvre l'invention et atteindre le rapport massique x / (E/C), un des éléments à considérer est donc le taux d'alcalins dans le ciment. Sélectionner un ciment présentant un bas taux d'alcalins dès sa fabrication (par exemple un ciment de type CEM I à bas taux d'alcalin ou utilisation d'un ciment composé) est une manière simple d'atteindre ce rapport et d'obtenir une mousse ultralégère. Cependant il existe d'autres manières d'obtenir le rapport cible, par exemple en diluant le ciment par ajout d'eau.

Le ciment utilisé dans le procédé selon l'invention comprend des particules présentant une distribution granulométrique telle que le rapport d_{max(h/2)}/d_{mm(h/2)} de la distribution de la taille des particules (selon une distribution en volume) est compris de 5 à 25, de préférence, ce rapport d_{max(h/2)}/d_{mm(h/2)} est compris de 6 à 14.

La distribution granulométrique des tailles de particule dans un échantillon est mesurée par la méthode de diffraction laser. Une telle distribution granulométrique peut être celle d'une population de particules solides monodisperse. Par monodisperse on entend que la représentation graphique de la distribution granulométrique de la taille des particules (abondance en volume en fonction de la taille, graduée selon une échelle en série de Renard) ne présente qu'un seul pic (une seule population). Cette définition de "charge monodisperse" exclut de préférence un empilement granulaire de plusieurs populations de particules de tailles différentes.

Un ensemble de particules de tailles différentes peut être caractérisé notamment par le ratio entre (i) la taille des particules les plus grandes à mi-hauteur (d_{max(h/2)}) et (ii) la taille des particules les plus fines à mi-hauteur (d_{mm(h/2)}). Pour la mise en oeuvre de l'invention ce ratio est de l'ordre de 5 à 25 dans le ciment utilisé, de préférence compris de 6 à 14.

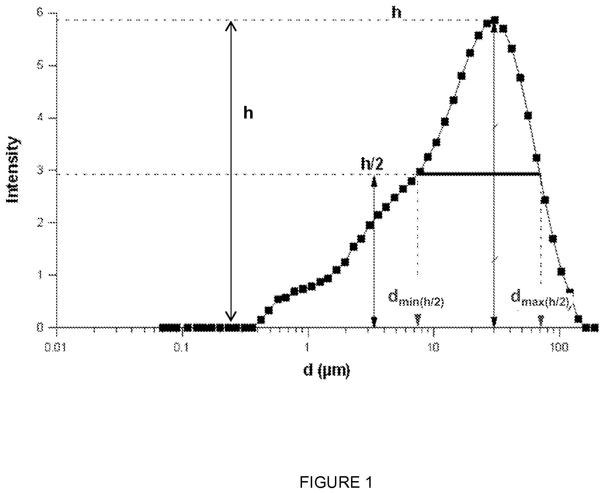

Les valeurs d_{max(h/2)} et d_{min(h/2)} sont obtenues comme suit : La hauteur h est la hauteur du plus haut pic mesuré par granulométrie laser selon une représentation en volume (voir par exemple la Figure 1). Prenant pour référence une hauteur h/2, d_{max(h/2)} et d_{min(h/2)} sont définis comme respectivement la taille de particules la plus grande et la taille de particules la plus petite ayant une proportion égale à h/2.

De préférence, le ciment utilisé dans le procédé selon l'invention comprend des particules présentant une distribution granulométrique monodisperse.

Un ciment est un liant hydraulique comprenant une proportion au moins égale à 50% en masse d'oxyde de calcium (CaO) et de dioxyde de silicium (SiO₂). Un ciment peut donc comprendre d'autres composés en sus du CaO et du SiO₂, et en particulier comprendre du clinker Portland, du laitier, de la fumée de silice, des pouzzolanes (naturelles et naturelle calcinées), des cendres volantes (siliceuse et calcique), du schiste et/ou du calcaire. Les ciments pouvant être utilisés dans le procédé selon l'mention pour réaliser les mousses minérales peuvent être sélectionnés parmi les ciments décrits dans la norme NF-EN197-1 d'avril 2012, en particulier être des ciments CEM I, CEM II, CEM III, CEM IV, ou CEM V.

Le ciment utilisé pour réaliser l'invention est de préférence choisi parmi les ciments disponibles sur le marché dont le taux d'alcalin est suffisamment bas, où « ciment bas alcalins ». Des ciments bas alcalins de type Portland sont des ciments préférés. Cependant si des ciments Portland et plus particulièrement le clinker qu'ils comprennent ont une proportion d'alcalins trop haute, de tels ciments peuvent être dilués par l'adjonction de composés comme du calcaire CaCO₃, du laitier, des cendres volantes, pouzzolanes ou leurs mélanges. Dans ce cas des ciments composés de types CEM II à V comprenant une proportion non négligeable d'autres composants que du clinker permettent de diluer les alcalins et d'atteindre la concentration voulue.

Selon un mode particulier de réalisation, le ciment pouvant convenir pour être utilisé selon la présente invention présente une surface spécifique Blaine comprise 3 500 à 10 000 cm²/g, de préférence comprise de 6000 à 9000 cm²/g.

Le ciment Portland pouvant être utilisé selon la présente invention peut être broyé et/ou séparé (par un séparateur dynamique) afin d'obtenir un ciment ayant une surface spécifique Blaine supérieure ou égale à 5 500 cm²/g. Ce ciment peut être qualifié d'ultrafin. Le ciment peut par exemple être broyé selon 2 méthodes.

Selon une première méthode, le ciment ou le clinker peut être broyé jusqu'à une surface spécifique Blaine de 5 500 à 10 000 cm²/g. Un séparateur de haute efficacité, de deuxième génération ou de troisième génération, ou un séparateur de très haute efficacité, peut être utilisé dans cette première étape pour séparer le ciment ayant la finesse désirée. La matière n'ayant pas la finesse désirée est renvoyée dans le broyeur.

Les broyeurs qui peuvent être utilisés dans cette méthode sont par exemple un broyeur à boulets, un broyeur vertical, une presse à rouleaux, un broyeur horizontal (par exemple de type Horomill©), un broyeur vertical agité (par exemple de type Tower Mill), un broyeur à billes agitées, ou tout autre type de broyeur adapté au broyage fin de particules minérales.

Selon une deuxième méthode, un ciment Portland peut passer dans un séparateur dynamique, afin d'extraire les plus fines particules, de façon à atteindre la finesse cible (supérieure à 5 500 cm²/g). La matière fine peut être utilisée telle quelle. La matière grossière est éliminée, utilisée pour d'autres applications ou renvoyée vers un circuit de broyage différent.

Le coulis de ciment utilisé dans le procédé selon l'invention peut avantageusement comprendre un agent réducteur d'eau du type plastifiant ou superplastifiant. Un agent réducteur d'eau permet de réduire d'environ 10 à 15% en masse la quantité d'eau de gâchage pour un temps d'ouvrabilité donné. A titre d'exemple d'agent réducteur d'eau, on peut citer les lignosulphonates, les acides hydroxycarboxyliques, les carbohydrates, et autres composés organiques spécifiques, comme par exemple le glycérol, l'alcool polyvinylique, l'aluminomethyl siliconate de sodium, l'acide sulfanilique et la caséine (voir Concrete Admixtures Handbook, Properties Science and Technology, V.S. Ramachandran, Noyes Publications, 1984). Les superplastifiants appartiennent à la nouvelle génération des agents réducteurs d'eau et permettent de réduire d'environ 30 % en masse la quantité d'eau de gâchage pour un temps d'ouvrabilité donné. A titre d'exemple de superplastifiant, on peut citer les superplastifiants PCP sans agent anti-mousse, les diphosphonates POE, les polyphosphates POE. On entend entre autre par le terme « PCP », ou «polycarboxylate polyoxyde», selon la présente invention un copolymère des acides acryliques ou acides méthacryliques, et de leurs esters de poly(oxyde d'éthylène) (POE).

De préférence, le coulis de ciment permettant de réaliser la mousse minérale selon l'invention comprend de 0,05 à 1 %, plus préférentiellement de 0,05 à 0,5 % d'un agent réducteur d'eau, d'un plastifiant ou d'un superplastifiant, pourcentage exprimé en masse sèche par rapport à la masse de coulis de ciment.

De préférence, l'agent réducteur d'eau du type plastifiant ou superplastifiant ne comprend pas d'agent anti-mousse.

Le coulis de ciment ou la mousse aqueuse peuvent également comprendre de 0,05 à 2,5% d'un accélérateur, pourcentage exprimé en masse sèche par rapport au ciment. Cet accélérateur peut provenir d'un ou plusieurs sels choisis parmi:
- les sels de calcium, les sels de potassium et les sels de sodium, dans lesquels l'anion peut être un nitrate, nitrite, chlorure, formiate, le thiocyanate, le sulfate, le bromure, le carbonate ou leurs mélanges; et
- des silicates et aluminates alcalins, par exemple le silicate de sodium, silicate de potassium, l'aluminate de sodium, l'aluminate de potassium ou leurs mélanges; les sels d'aluminium, par exemple le sulfate d'aluminium, nitrate d'aluminium, le chlorure d'aluminium, l'hydroxyde d'aluminium ou des mélanges de ceux-ci.

Selon un mode particulier de réalisation, la mousse aqueuse ne comprend pas d'accélérateur, en particulier de sels de calcium.

D'autres additifs peuvent être ajoutés soit dans le coulis de ciment soit dans la mousse aqueuse. De tels additifs peuvent par exemple être un agent épaississant, un agent viscosant, un agent entraîneur d'air, un retardateur, un inertant des argiles, des pigments, des colorants, des billes de verre creuses, des agents filmogènes, des agents hydrophobes ou dépolluants (comme par exemple des zéolithes ou du dioxyde de titane), des latex, des fibres organiques ou minérales, des additions minérales ou leurs mélanges.

De préférence, les additifs utilisés ne comprennent pas d'agent anti-mousse.

De préférence la mousse minérale selon la mention comprend une addition minérale. Cette addition minérale peut être ajoutée au cours du procédé selon l'invention dans le coulis de ciment.

Les additions minérales sont, par exemple, des laitiers (par exemple tels que définis dans la norme NF EN 197-1 d'avril 2012, paragraphe 5.2.2), des pouzzolanes (par exemple telles que définies dans la norme NF EN 197-1 d'avril 2012, paragraphe 5.2.3), des cendres volantes (par exemple telles que définies dans la norme NF EN 197-1 d'avril 2012, paragraphe 5.2.4), des schistes calcinés (par exemple tels que définis dans la norme NF EN 197-1 d'avril 2012, paragraphe 5.2.5), des matériaux à base de carbonate de calcium, tel que du calcaire (par exemple tel que défini dans la norme NF EN 197-1 d'avril 2012, paragraphe 5.2.6), des fumées de silice (par exemple telles que définies dans la norme NF EN 197-1 d'avril 2012, paragraphe 5.2.7), des métakaolins ou leurs mélanges.

Cependant, selon un aspect particulièrement préféré de l'invention, seul un nombre limité de composants est utilisé. Ainsi la mousse minérale peut n'être constituée soit que de ciment, d'eau et d'un agent moussant, soit que de ciment, d'eau d'un agent moussant et d'un agent réducteur d'eau du type plastifiant ou superplastifiant, tel que un PCP.

Une telle formulation permet des gains de temps et coûts considérables et vient à l'encontre des préjugés techniques selon lesquels l'utilisation d'additifs divers est nécessaire pour assurer la stabilité d'une mousse de ciment.

De préférence, la mousse minérale obtenue par le procédé selon l'invention ne contient substantiellement pas de particules fines. Par l'expression «particule fine», on entend une population de particules donc le diamètre médian D50 est strictement inférieur à 2 µm. Le D50, également noté D_{V}50, correspond au 50^{ème} centile de la distribution en volume de taille des particules, c'est-à-dire que 50 % du volume est constitué de particules dont la taille est inférieure au D50 et 50 % de taille supérieure au D50.

Par le terme « substantiellement », on entend moins de 1 %, avantageusement moins de 5%, exprimé en masse par rapport à la masse de ciment.

Selon un autre aspect de l'invention la mousse minérale obtenue par le procédé selon l'invention ne contient pas un mélange de deux composés organiques formant respectivement un composé anionique et un composé cationique à longue chaines tels que décrits dans le brevet US 5,696,174.

Les ciments convenant peu ou pas pour la réalisation de l'invention sont les ciments d'aluminates de calcium ou leurs mélanges. Les ciments d'aluminates de calcium sont des ciments généralement comprenant une phase minéralogique C4A3$, CA, C12A7, C3A ou C11A7CaF2 ou leurs mélanges, tel que par exemple, les Ciments Fondu®, les ciments sulfoalumineux, les ciments d'aluminates de calcium conformes à la norme européenne NF EN 14647 de décembre 2006. De tels ciments sont caractérisés par une teneur en alumine (Al2O3) supérieure ou égale à 35% en masse. Ainsi pour la réalisation du procédé selon l'invention la teneur en alumine du composé minéral sec utilisé pour réaliser la mousse est inférieure à 35% en masse du composé minéral sec. De préférence cette teneur est inférieure ou égale à 30%, avantageusement inférieure ou égale à 20%, plus avantageusement inférieure ou égale à 15 %, et encore plus avantageusement inférieure ou égale à 10%, en masse du composé sec.

Selon un premier mode de réalisation, le coulis de ciment peut être préparé en introduisant dans un malaxeur le ciment, et éventuellement tous les autres matériaux sous forme de poudre. Le ciment est malaxé pour obtenir un mélange homogène. Puis l'eau est introduite dans le malaxeur. Le ou les adjuvants tels que par exemple l'agent réducteur d'eau, sont introduits avec l'eau lorsqu'ils sont présents dans la formulation de la mousse minérale. La pâte obtenue est malaxée pour obtenir un coulis de ciment.

De préférence, le coulis de ciment est maintenu sous agitation, par exemple avec une pâle défloculeuse, la vitesse de la pâle pouvant varier de 1000 tours / minute à 400 tours / minute en fonction du volume de coulis pendant toute la durée du procédé de fabrication de la mousse minérale selon l'invention.

Selon un deuxième mode de réalisation, le coulis de ciment peut être préparé en introduisant une partie de l'eau dans un malaxeur, puis le ciment, et ensuite les autres composés.

Selon un troisième mode de réalisation, le coulis de ciment peut être généré de façon continue.

Pour réaliser le coulis de ciment, le rapport E/C de ce coulis peut avantageusement être compris de 0,23 à 2,0, de préférence de 0,25 à 0,60, par exemple égal à 0,29, le rapport étant exprimé en masse.

La mousse aqueuse peut être réalisée en mettant en contact de l'eau et un agent moussant, puis en y introduisant un gaz. Ainsi la mousse aqueuse comprend de l'eau et un agent moussant. Ce gaz est de préférence de l'air. La quantité d'agent moussant est généralement comprise entre 0,25 et 5% en masse de matière sèche d'agent moussant par rapport à la masse d'eau, de préférence de 0,75% à 2,5%. L'introduction d'air peut se faire par agitation, par bullage ou par injection sous pression. De préférence, la mousse aqueuse peut être réalisée à l'aide d'un mousseur turbulent (lit de billes de verre par exemple). Ce type de mousseur permet d'introduire de l'air sous pression dans une solution aqueuse comprenant un agent moussant.

De préférence, la mousse aqueuse peut être générée de façon continue.

La mousse aqueuse générée a une taille de bulles d'air présentant un D50 qui est inférieur ou égal à 400 µm, de préférence comprise de 100 à 400 µm, plus préférentiellement compris de 150 à 300 µm. Le D50, également noté D_{V}50, correspond au 50^{ème} centile de la distribution en volume de taille des particules, c'est-à-dire que 50 % du volume est constitué de particules dont la taille est inférieure au D50 et 50 % de taille supérieure au D50.

De préférence la mousse aqueuse générée a une taille de bulles d'air présentant un D50 égal à 250 µm.

Le D50 des bulles est mesuré par rétrodiffusion. L'appareil utilisé est le Turbiscan ® Online fourni par la société Formulaction. Les mesures par rétrodiffusion rendent possible l'estimation du D50 pour les bulles d'une mousse aqueuse, en connaissant la fraction volumique des bulles et l'indice de réfraction de la solution d'agent moussant.

De préférence l'agent moussant est un dérivé organique de protéines d'origine animale (par exemple, l'agent moussant nommé Propump26, poudre de kératine hydrolysée, vendue par la société Propump) ou végétale. Les agents moussants peuvent aussi être des tensio-actifs cationiques (par exemple cetyltrimethylammonium CTAB), anioniques, amphotériques (par exemple cocoamidopropyl bétaïne CAPB), ou encore non ioniques, ou leurs mélanges.

La mise en contact du coulis de ciment avec la mousse aqueuse pour obtenir un coulis de ciment moussé peut se faire par tout moyen et par exemple à l'aide d'un mélangeur statique.

Selon un mode de réalisation plus particulier, le coulis de ciment est pompé selon un débit volumique constant fonction de la composition de coulis de ciment moussé cible.

Puis le coulis de ciment est mis en contact avec la mousse aqueuse déjà mise en circulation dans le circuit du procédé. Le coulis de ciment moussé selon l'invention est alors généré. Ce coulis de ciment moussé est mis en forme et laissé jusqu'à ce que la prise s'effectue.

Avantageusement, le procédé selon l'invention ne nécessite pas d'étape d'autoclave, ni d'étape de cure, ni d'étape de traitement thermique, par exemple à 60-80°C afin d'obtenir une mousse de ciment selon l'invention.

La mousse minérale peut être préfabriquée ou directement préparée sur un chantier en installant un système de moussage sur place.

De préférence, la mousse minérale obtenue par le procédé selon l'invention présente une densité à état sec comprise de 35 à 300 kg / m³, plus préférentiellement de 50 à 150 kg / m³, encore plus préférentiellement de 50 à 80 kg / m³. Il est à noter que la densité du coulis de ciment moussé (densité humide) diffère de la densité de la mousse minérale (densité de matériau durci).

De préférence, la mousse minérale obtenue par le procédé selon l'invention présente une conductivité thermique comprise de 0,030 à 0,150 W/(m.K), de préférence de 0,030 à 0,060 W/(m.K) et plus préférentiellement de 0,030 à 0,040 W/(m.K), la marge d'erreur étant de ± 0.4 mW/(m.K). La mousse minérale obtenue par le procédé selon l'invention peut être utilisée pour couler des murs, planchers, toitures pendant un chantier. Il est aussi envisagé de réaliser des éléments préfabriqués en usine de préfabrication à partir de la mousse selon l'invention tels que des blocs, des panneaux.

Avantageusement, la mousse minérale obtenue par le procédé selon l'invention permet de remplacer dans certains cas la laine de verre, la laine minérale ou les isolants en polystyrène et le polyuréthane.

De préférence, la mousse minérale obtenue par le procédé selon l'invention présente donc une très faible conductivité thermique. Diminuer la conductivité thermique des matériaux de construction est hautement désirable puisqu'elle permet d'obtenir une économie d'énergie de chauffage dans les immeubles d'habitation ou de travail. De plus la mousse minérale selon l'invention permet d'obtenir de bonnes performances d'isolation sur de faibles épaisseurs et donc de préserver les surfaces et volumes habitables. La conductivité thermique (encore appelée lambda (λ)) est une grandeur physique caractérisant le comportement des matériaux lors du transfert de chaleur par conduction. La conductivité thermique représente la quantité de chaleur transférée par unité de surface et par une unité de temps sous un gradient de température. Dans le système international d'unités, la conductivité thermique est exprimée en watts par mètre kelvin (W·m-1·K- 1). Les bétons classiques ou traditionnels ont une conductivité thermique entre 1,3 et 2,1 mesurée à 23°C et 50 % d'humidité relative. La mousse minérale selon l'invention peut être choisie parmi les mousses ayant une conductivité thermique allant de 0,030 à 0,150 W/(m.K), de préférence de 0,030 à 0,060 W/(m.K) et plus préférentiellement de 0,030 à 0,040 W/(m.K), la marge d'erreur étant de ± 0.4 mW/(m.K).

Avantageusement, la mousse minérale obtenue par le procédé selon l'invention peut être utilisée en comblement ou remplissage d'un espace vide ou creux d'un bâtiment, d'un mur, d'une cloison, d'un bloc de maçonnerie par exemple un parpaing, d'une brique, d'un sol ou d'un plafond. De tels matériaux ou éléments de constructions composites comprenant la mousse minérale selon l'invention sont également des objets de l'invention *per se.*

Avantageusement, la mousse minérale obtenue par le procédé selon l'invention peut être utilisée comme revêtement de façade par exemple pour isoler un bâtiment par l'extérieur. Dans ce cas, la mousse minérale selon l'invention pourra être enduite d'un enduit de finition.

La mousse minérale obtenue par le procédé selon l'invention pourra être coulée en vertical entre deux parois, choisies par exemple parmi des voiles béton, murs de briques, plaques de plâtre, plaque de bois, par exemple les panneaux de bois à lamelles minces orientées, ou panneaux fibrociment, le tout formant un dispositif.

L'invention sera mieux comprise à la lecture des exemples et des figures qui suivent qui ne présentent aucun caractère limitatif, dans lesquelles :
La Figure 1 est une représentation graphique de la distribution de la taille des particules présente dans un ciment typique utilisé pour réaliser l'invention.

Les méthodes de mesures suivantes ont été utilisées :

### Méthode de granulométrie laser

Les courbes granulométriques des différentes poudres sont obtenues à partir d'un granulomètre laser de type Mastersizer 2000 (année 2008, série MAL 1020429) vendu par la société Malvern.

La mesure s'effectue dans un milieu approprié (par exemple, en milieu aqueux) afin de disperser les particules ; la taille des particules doit être comprise de 1 µm à 2 mm. La source lumineuse est constituée par un laser rouge He-Ne (632 nm) et une diode bleue (466 nm). Le modèle optique est celui de Fraunhofer, la matrice de calcul est de type polydisperse.

Une mesure de bruit de fond est d'abord effectuée avec une vitesse de pompe de 2000 tr/min, une vitesse d'agitateur de 800 tr/min et une mesure du bruit sur 10 s, en l'absence d'ultrasons. On vérifie alors que l'intensité lumineuse du laser est au moins égale à 80%, et que l'on obtient une courbe exponentielle décroissante pour le bruit de fond. Si ce n'est pas le cas, les lentilles de la cellule doivent être nettoyées.

On effectue ensuite une première mesure sur l'échantillon avec les paramètres suivants : vitesse de pompe de 2000 tr/min, vitesse d'agitateur de 800 tr/min, absence d'ultrasons, limite d'obscuration entre 10 et 20 %. L'échantillon est introduit pour avoir une obscuration légèrement supérieure à 10 %. Après stabilisation de l'obscuration, la mesure est effectuée avec une durée entre l'immersion et la mesure fixée à 10 s. La durée de mesure est de 30 s (30000 images de diffraction analysées). Dans le granulogramme obtenu, il faut tenir compte du fait qu'une partie de la population de la poudre peut être agglomérée.

On effectue ensuite une seconde mesure (sans vidanger la cuve) avec des ultrasons. La vitesse de pompe est portée à 2500 tr/min, l'agitation à 1000 tr/min, les ultrasons sont émis à 100 % (30 watts). Ce régime est maintenu pendant 3 minutes, puis on revient aux paramètres initiaux : vitesse de pompe de 2000 tr/min, vitesse d'agitateur de 800 tr/min, absence d'ultrasons. Au bout de 10 s (pour évacuer les bulles d'air éventuelles), on effectue une mesure de 30 s (30000 images analysées). Cette seconde mesure correspond à une poudre désagglomérée par dispersion ultrasonique.

Chaque mesure est répétée au moins deux fois pour vérifier la stabilité du résultat. L'appareil est étalonné avant chaque séance de travail au moyen d'un échantillon standard (silice C10 Sifraco) dont la courbe granulométrique est connue. Toutes les mesures présentées dans la description et les gammes annoncées correspondent aux valeurs obtenues avec ultrasons.

### Méthode de mesure de la surface spécifique BLAINE

La surface spécifique des différents matériaux est mesurée comme suit.

La méthode Blaine à 20°C avec une humidité relative ne dépassant pas 65 % en utilisant un appareil Blaine Euromatest Sintco conforme avec la norme européenne EN 196-6 ;
Avant la mesure de la surface spécifique, les échantillons humides sont séchés dans une étuve jusqu'à l'obtention d'une masse constante à une température de 50 à 150°C (le produit séché est ensuite broyé pour obtenir une poudre dont la taille maximale de particules est inférieure ou égale à 80 µm).

### Méthode de mesure de la teneur en alcalins :

Les teneurs en alcalins (%K₂O et %Na₂O) de ces ciments ont été mesurées par spectrométrie d'émission atomique, méthode dénommée ICP-AES (ICP pour Plasma à Couplage Inductif, AES pour Spectrométrie d'Emission Atomique. L'appareil de mesure était le modèle 720-ES, série EL06093608 de 2006, de la société Varian. Pour effectuer cette mesure un échantillon de 2 g de ciment est solubilisé dans 100 mL d'eau déminéralisée pendant 15 minutes puis filtré à l'aide de deux filtres papier superposés, par exemple un premier du type MN640W et un second du type MN640DD, dans une fiole de 200 mL, puis rincé à l'eau déminéralisée. On ajoute 20 mL d'acide chlorhydrique à la concentration de 1/20 (volume / volume). La fiole est complétée au trait de jauge à 200mL par ajout d'eau déminéralisée. Cette solution est ensuite analysée à l'aide de l'appareil ICP-AES.
Puis la teneur en Na₂O équivalent solubles est calculée sur la base de la formule suivante :
((M_{Na2O} / M_{K2O)*} K₂O+Na₂O) = Na₂O_{eq}, M étant la masse molaire des composés portés en indice.

### EXEMPLES DE REALISATION

Le procédé selon l'invention a été mis en pratique pour réaliser des mousses de ciments de formules I, II, V, VII, VIII, IX, X et XI. Des exemples comparatifs III, IV et VI ont également été réalisés de manière à mettre en évidence les aspects avantageux du procédé selon l'invention.

### Matériaux :

Les ciments utilisés sont des ciments Portland provenant de différentes cimenteries Lafarge identifiées par le nom du lieu où elles se trouvent comme précisé dans le tableau (I). Ces ciments sont des ciments de type standard. Les lettres « R » et « N » correspondent à la définition de la norme NF EN 197-1, version d'avril 2012.

L'anhydrite Micro A est du sulfate de calcium anhydre provenant de la société Anhydrite Minérale France.

Les superplastifiants utilisés sont des mélanges comprenant un polycarboxylate polyoxyde (PCP) provenant de la société Chryso sous le nom Chrysolab EPB530-017 (Formules III à X) et Chrysolab EPB530-026 (Formules I et II). Ils sont basés sur les produits Premia180 (pour le Chrysolab EPB530-017) et Optima203 (pour le Chrysolab EPB530-026) et ne comprennent pas d'agent anti-mousse. L'extrait sec du Chrysolab EPB530-017 est de 48%, pourcentage en masse. L'extrait sec du Chrysolab EPB530-026 est de 58%, pourcentage en masse.

Les agents moussants utilisés sont des dérivés de protéines animales et sont les suivants :
- Propump26 et Propump 40 provenant de la société Propump, dont les extraits secs sont respectivement de 26 et 34%, pourcentage en masse ;
- MAPEAIR L/LA provenant de la société MAPEÏ, dont l'extrait sec est de 26%, pourcentage en masse ;
- Foamcem provenant de la société LASTON, dont l'extrait sec est de 28%, pourcentage en masse ;
- EFA 1500 provenant de la société Edama, dont l'extrait sec est de 36%, pourcentage en masse.

L'eau est l'eau du robinet.

### Matériels utilisés :

### Malaxeurs Rayneri:

- Un mélangeur modèle R 602 EV (2003) fourni par la société Rayneri. Le mélangeur est composé d'un châssis sur lequel viennent se positionner des cuves allant de 10 à 60 litres. La cuve de 10L a été utilisée avec une pâle type palette adaptée au volume de la cuve. Cette pâle exerce un mouvement de rotation sur elle-même accompagné d'un mouvement planétaire autour de l'axe de la cuve.
- Un mélangeur Turbotest (MEXP-101, modèle Turbotest 33/300, n° série : 123861) fourni par la société Rayneri. Il s'agit d'un malaxeur à axe vertical.

### Pompes :

- Une pompe à vis excentrée Seepex™ de type MD 006-24 n° de commission 244920.
- Une pompe à vis excentrée Seepex™ de type MD 006-24 n° de commission 278702.

### Mousseur :

- Un mousseur composé d'un lit de billes de verre de type SB30 de diamètre compris entre 0,8 et 1,4mm entassées selon un tube de longueur 100mm et de diamètre 12mm.

### Mélangeur statique :

- Un mélangeur statique composé de 32 éléments hélicoïdaux de type Kenics de 19mm de diamètre référencé 16La632 chez ISOJET

Dans la suite des exemples, des mousses minérales ont été réalisées. Chaque coulis de ciment est référencé par un numéro de I à XI et chaque mousse aqueuse porte un numéro de 1 à 6. La mousse de ciment (ou mousse minérale selon l'invention) obtenue est une combinaison d'un de ces coulis de ciment avec une de ces mousses aqueuses.

### I. Réalisation de mousses minérales

### I.1 Réalisation d'un coulis de ciment

Les compositions chimiques des différents coulis de ciment utilisés pour réaliser l'invention sont présentées dans le tableau I. Les coulis ont été réalisés avec le malaxeur Rayneri R 602 EV par introduction préalable des composants solides (ciment) puis ajout progressif de l'eau et de l'adjuvant. Le coulis a été ensuite malaxé deux minutes supplémentaires.

**Tableau (I) : Formulation des coulis de ciment**

| | Formules | | | | | | | | |
|---|---|---|---|---|---|---|---|---|---|
| | I | II | III | IV | V | VI | VII | VIII | IX |
| type de ciment | CEM I 52,5 N | CEM I 52,5 R | CEM I 52,5 R | CEM I 52,5 R | CEM III/B 42,5 N | CEM I 52,5 R | CEM I 52,5 R | CEM I 52,5 R | CEM I 52,5 R |
| Usine Lafarge | Le Havre | Le Teil | La Malle | Port La Nouvelle | La Malle | Saint Pierre La Cour | Saint Pierre La Cour | Saint Pierre La Cour | Val d'Azergue |
| x (%Na2O eq soluble) | 0,22 | 0,14 | 0,78 | 0,54 | 0,43 | 0,66 | 0,66 | 0,66 | 0,4 |
| ciment (% massique) | 78,80 | 77,54 | 77,30 | 77,44 | 77,99 | 76,87 | 68,87 | 66,56 | 66,18 |
| eau (% massique) | 21,20 | 22,46 | 22,70 | 22,56 | 22,01 | 23,13 | 31,13 | 33,44 | 33,82 |
| Superplastifiant (% massique) | 0,06 | 0,08 | 0,18 | 0,10 | 0,13 | 0,13 | 0,01 | 0,00 | 0,00 |
| rapport E/C (en masse) | 0,27 | 0,29 | 0,29 | 0,29 | 0,29 | 0,28 | 0,45 | 0,5 | 0,51 |
| x / (E/c) | 0,759 | 0,483 | 2,69 | 1,862 | 1,483 | 2,276 | 1,467 | 1,320 | 0,784 |
| d_{max(h/2)} / d_{min(h/2)} | 8,4 | 10,5 | 13,4 | 6,5 | 7,2 | 6,8 | 6,8 | 6,8 | 10,2 |

| | X | | | | | XI | | | |
|---|---|---|---|---|---|---|---|---|---|
| type de ciment | CEM I 52,5 R (Blaine = 6340 cm2/g) | | | | | CEM I 52,5 R (Blaine = 9000 cm2/g) | | | |
| Usine Lafarge | Saint Pierre La Cour | | | | | Saint Pierre La Cour | | | |
| Ciment (% massique) | 16,33 | | | | | 16,15 | | | |
| Addition (% massique) | 60,33 | | | | | 59,79 | | | |
| Anhydrite Micro A (% massique) | 0,37 | | | | | 0,74 | | | |
| Eau (% massique) | 22,85 | | | | | 23,15 | | | |
| SP superplastifiant (% massique) | 0,12 | | | | | 0,18 | | | |
| rapport E/C (en masse) | 1,40 | | | | | 1,43 | | | |
| rapport E/L (massique) | 0,30 | | | | | 0,30 | | | |
| x (%Na2O eq soluble) | 0,61 | | | | | 0,69 | | | |
| x/(E/C) | 0,436 | | | | | 0,480 | | | |
| d_{max(h/2)} / d_{min(h/2)} | 18,2 | | | | | 24,5 | | | |

Les valeurs d_{max(h/2)} et d_{min(h/2)} sont mesurées comme décrit ci-dessus, en référence à la Figure 1.

Les résultats sont généralement visualisés sous forme de graphe, tel que celui représenté à la Figure 1 qui représente une distribution granulaire en volume typique. La hauteur h est la hauteur du plus haut pic mesuré par granulomètrie Laser (Figure 1). Prenant pour référence une hauteur h/2, d_{max(h/2)} et d_{min(h/2)} sont définis comme respectivement la taille de particules la plus grande et la taille de particules la plus petite ayant un passant égal à la quantité h/2.

### 1.2 Réalisation de la mousse aqueuse

Une solution aqueuse contenant l'agent moussant a été introduite dans une cuve tampona été introduite dans une cuve tampon. La composition de cette solution aqueuse d'agent moussant (notamment la concentration et la nature de l'agent moussant) est rapportée dans le tableau II. La solution d'agent moussant a été pompée par la pompe volumétrique à vis excentrée Seepex™ MD 006-24 (n° commission : 278702).

Cette solution d'agent moussant a été co-introduite à travers le lit de billes du mousseur avec de l'air sous pression (plage allant de 1 à 6 bars) à l'aide d'une jonction en T. La mousse aqueuse a été générée de façon continue au débit indiqué dans le tableau II.

**Tableau II : formulation des mousses aqueuses et débit**

| Numero mousse aqueuse | 1 | 2 | 3 | 4 | 5 | 6 |
|---|---|---|---|---|---|---|
| Agent Moussant | Propump 26 | Propump 40 | MapeAIR L/LA | Foamcem | EFA1500 | Propump26 |
| Concentration (%liq/eau) | 4,5 | 3 | 2,5 | 3 | 1,5 | 3,5 |
| Concentration (%sec/eau) | 1,17 | 1,02 | 0,65 | 0,84 | 0,54 | 0,91 |
| Débit Air (L/min) | 8 | 8 | 8 | 8 | 8 | 8 |
| Débit Solution (L/min) | 0,41 | 0,418 | 0,41 | 0,41 | 0,418 | 0,418 |

### 1.3 Réalisation d'un coulis de ciment moussé :

Le coulis de ciment, obtenu précédemment, a été versé dans une cuve tampon maintenue sous agitation à l'aide d'un mélangeur Turbotest Rayneri (MEXP-101) comprenant une pâle défloculeuse (vitesse de la pâle ajustable de 1000 tours/minutes à 400 tours minutes en fonction du volume coulis). Le coulis a été pompé grâce à une pompe volumétrique à vis excentrée Seepex™ MD 006-24 (n° de commission : 244920).

Le coulis pompé et la mousse aqueuse précédente, générée en continu, ont été mis en contact dans le mélangeur statique en respectant les débits précisés dans le tableau II. Le volume de coulis de ciment utilisé a été d'environ 33 L/m3 et le volume de mousse aqueuse d'environ 967 L/m3. Le coulis de ciment moussé est alors généré.

### 1.4 Obtention d'une mousse minérale

Le coulis de ciment moussé a été coulé dans des cubes en polystyrène de 10x10x10cm de côté et dans des colonnes cylindriques de 2,50 m de haut et 20 cm de diamètre. Trois cubes ont été réalisés pour chaque coulis moussé. Les cubes ont été démoulés à 1 jour puis conservés 7 jours à 100% d'humidité relative et 20°C. Les cubes ont ensuite été séchés à 45°C jusqu'à obtention d'une masse constante. Une colonne a été réalisée pour certains coulis moussés. Les colonnes ont été démoulées entre 3 et 7 jours puis découpées en tronçon de 25 cm de long. Les tronçons ont été séchés à 45°C jusqu'à obtention d'une masse constante.

### II. Analyse de la mousse minérale

### II.1 Stabilité de la mousse minérale

La stabilité des mousses a été mesurée simplement par inspection visuel des cubes générés avant démoulage. Une mousse a été décrite comme « stable » si le cube considéré a conservé une hauteur de 10cm après sa prise. Une mousse a été caractérisée comme « instable » si le cube considéré s'est affaissé au cours de sa prise. Chaque essai a été réalisé sur 3 cubes 10*10*10 cm. Les résultats montrent un comportement similaire entre les 3 cubes. Quand il y a lieu, les résultats exprimés sont la moyenne de ces 3 cubes.

Une colonne a été considérée comme stable lorsque l'écart de densité entre le tronçon du bas et le tronçon du haut de la colonne n'excède pas 5 kg/m³.

### II.2 Conductivité thermique des mousses minérales

La conductivité thermique a été mesurée à l'aide d'un appareil de mesure de la conductivité thermique : CT-mètre fourni par la société Alphis-ERE (Résistance 5Ω, fil sonde 50mm). La mesure a été effectuée sur des échantillons séchés à 45°C jusqu'à masse constante. L'échantillon a ensuite été coupé en deux morceaux égaux à l'aide d'une scie. La sonde de mesure a été placée entre les deux faces planes de ces deux moitiés d'échantillons (cotés sciés). La chaleur a été transmise de la source vers le thermocouple à travers le matériau entourant la sonde. L'élévation de température du thermocouple a été mesurée en fonction du temps et a permis de calculer la conductivité thermique de l'échantillon.

### II.3 Densité des mousses minérales

La densité humide des coulis de ciment moussés a été mesurée par pesée des cubes au moment du coulage.

La densité sèche des échantillons a été mesurée sur des échantillons séchés à 45°C jusqu'à masse constante, toujours par pesée des cubes.

### II.4 Résultats

Les résultats sont présentés dans les tableaux III et IV ci-dessous.

**Tableau (III) : Analyses des mousses minérales avec l'agent moussant Propump26**

| | | | | | | | | | | | |
|---|---|---|---|---|---|---|---|---|---|---|---|
| Formule mousse aqueuse | 1 | 1 | 1 | 1 | 1 | 1 | 1 | 1 | 1 | 1 | 1 |
| Formule Coulis | I | II | III | IV | V | VI | VII | VIII | IX | X | XI |
| densité humide du coulis moussé (g/l) | 108 | 113 | 112 | 117 | 114 | 112 | 110 | 113 | 112 | 100 | 102 |
| densité sèche (g/l) | 72 | 71 | - | - | 76 | - | 82 | 71 | 69 | 57 | 59 |
| stabilité (cube) | Stable | Stable | Pas stable | Pas stable | Stable | Pas stable | Stable | Stable | Stable | Stable | Stable |
| Stabilité (colonne) | Stable | Stable | Pas stable | Pas stable | Non Mesuré | Pas stable | Stable | Non Mesuré | Stable | Stable | Stable |
| Lambda (w/k.m - mesure CT-mètre) | 0,043 | 0,044 | - | - | Non Mesuré | - | Non Mesuré | Non Mesuré | Non Mesuré | 0,041 | Non Mesuré |

| | | | | | | | | | | | |
|---|---|---|---|---|---|---|---|---|---|---|---|
| Pas stable signifie que la mousse s'est effondrée. | | | | | | | | | | | |

**Tableau (IV) : Analyses des mousses minérales avec différents agents moussants**

| | | | | | | | | | | |
|---|---|---|---|---|---|---|---|---|---|---|
| Formule mousse aqueuse | 2 | 2 | 3 | 3 | 4 | 4 | 5 | 5 | 6 | 6 |
| Formule Coulis | II | VI | II | VI | II | VI | II | VI | II | VI |
| densité humide du coulis moussé (g/l) | 112 | 118 | 105 | 109 | 104 | 112 | 117 | 111 | 106 | 109 |
| densité sèche (g/l) | 73 | | 69 | | 68 | | 76 | | 69 | |
| stabilité (cube) | Stable | Pas Stable | Stable | Pas stable | Stable | Pas stable | Stable | Pas stable | Stable | Pas stable |
| Stabilité (colonne) | Stable | Pas Stable | Stable | Pas stable | Stable | Pas stable | Stable | Pas stable | Stable | Pas stable |
| Lambda (w/k.m - mesure CT-mètre) | 0,043 | | 0,042 | | 0,043 | | Non Mesuré | | 0,043 | |

| | | | | | | | | | | |
|---|---|---|---|---|---|---|---|---|---|---|
| Pas stable signifie que la mousse s'est effondrée. | | | | | | | | | | |

### II.5 Conclusions

Ces exemples permettent d'apprécier le rôle du taux d'alcalin équivalent soluble dans la stabilité de la mousse de ciment. Ainsi lorsque le taux d'alcalin est maintenu à un degré peu élevé, par l'utilisation d'un ciment à faible taux d'alcalin, ou lorsque le x / (E/C) est inférieur à 1,75, la mousse est stable. Lorsque le taux d'alcalin augmente la mousse est déstabilisée et s'effondre. On peut noter que la nature du clinker utilisé n'influe pas sur la stabilité de la mousse. Ainsi, le clinker présent dans le ciment de la formule de coulis III (comparatif) et V (selon l'invention) est d'une même origine. Cependant le taux d'alcalin équivalent soluble du ciment utilisé dans la formule V est fortement diminué par ajout de laitier. Cette dilution permet d'obtenir la stabilité recherchée.

## Revendications

1. Procédé de fabrication d'une mousse minérale comprenant les étapes suivantes :
(i) préparer indépendamment un coulis de ciment et une mousse aqueuse, le coulis de ciment étant préparé par mélange d'eau E et de ciment C, le ciment C comprenant une quantité x de Na₂O équivalent solubles, x exprimé en masse pour 100 parts de ciment, ledit coulis présentant un rapport x / (E/C) inférieur ou égal à 1,75, avec E/C exprimé en masse, et les particules du ciment C présentant une distribution granulométrique telle que le rapport d_{max(h/2)}/d_{mm(h/2)} de la distribution de la taille des particules est compris de 5 à 25 ;
(ii) mettre en contact le coulis de ciment avec la mousse aqueuse pour obtenir un coulis de ciment moussé ; et
(iii) mettre en forme le coulis de ciment moussé obtenu à l'étape (ii) et laisser la prise s'effectuer.

2. Procédé selon la revendication 1, dans lequel le rapport x / (E/C) est inférieur ou égal à 1,60 de préférence inférieur ou égal à 1,50.

3. Procédé selon la revendication 1 ou 2, dans lequel le rapport d_{max(h/2)}/d_{min(h/2)} est compris de 6 à 14.

4. Procédé selon l'une quelconque des revendications précédentes, dans lequel le ciment est un ciment de type CEM I, CEM II, CEM III, CEM IV ou CEM V.

5. Procédé selon l'une quelconque des revendications précédentes, dans lequel le ciment présente une surface spécifique Blaine comprise 3 500 à 10 000 cm²/g.

6. Procédé selon l'une quelconque des revendications précédentes, dans lequel le coulis de ciment comprend un agent réducteur d'eau du type plastifiant ou superplastifiant.

7. Procédé selon l'une quelconque des revendications précédentes, dans lequel la mousse minérale comprend une addition minérale.

8. Procédé selon l'une quelconque des revendications précédentes, dans lequel la mousse minérale ne contient substantiellement pas de particules fines.

9. Procédé selon l'une quelconque des revendications précédentes, dans lequel le rapport massique E/C du coulis de ciment est compris de 0,23 à 2,0.

10. Procédé selon l'une quelconque des revendications précédentes, dans lequel la mousse aqueuse comprend de l'eau et un agent moussant.

## Patentansprüche

1. Verfahren zur Herstellung eines Mineralschaums, umfassend die folgenden Schritte:
(i) unabhängiges Zubereiten eines Zementschlamms und eines wässrigen Schaums, wobei der Zementschlamm durch Mischen von Wasser E und von Zement C zubereitet wird, wobei der Zement C eine Menge x löslichen Na₂O-Äquivalents umfasst, x ausgedrückt in Masse auf 100 Zementanteile, wobei der Schlamm ein Verhältnis x / (E/C) unter oder gleich 1,75 aufweist, mit E/C ausgedrückt in Masse, und wobei die Partikel des Zements C eine granulometrische Verteilung aufweisen, die derart ist, dass das Verhältnis d_{max(h/2)}/d_{min(h/2)} der Verteilung der Größe der Partikel von 5 bis 25 inklusive ist;
(ii) Inkontaktversetzen des Zementschlamms mit dem wässrigen Schaum, um einen schaumigen Zementschlamm zu erhalten; und
(iii) Formen des in Schritt (ii) erhaltenen schaumigen Zementschlamms und Stattfindenlassen des Abbindens.

2. Verfahren nach Anspruch 1, wobei das Verhältnis x / (E/C) kleiner oder gleich 1,60, vorzugsweise kleiner oder gleich 1,50, ist.

3. Verfahren nach Anspruch 1 oder 2, wobei das Verhältnis d_{max(h/2)}/d_{min(h/2)} von 6 bis 14 inklusive ist.

4. Verfahren nach einem der vorangehenden Ansprüche, wobei der Zement ein Zement des Typs CEM I, CEM II, CEM III, CEM IV oder CEM V ist.

5. Verfahren nach einem der vorangehenden Ansprüche, wobei der Zement eine spezifische Blaine-Oberfläche von 3 500 bis 10 000 cm²/g inklusive aufweist.

6. Verfahren nach einem der vorangehenden Ansprüche, wobei der Zementschlamm ein Wasserreduziermittel des Typs Weichmacher oder Superweichmacher umfasst.

7. Verfahren nach einem der vorangehenden Ansprüche, wobei der Mineralschaum einen mineralischen Zuschlag umfasst.

8. Verfahren nach einem der vorangehenden Ansprüche, wobei der Mineralschaum substantiell keine feinen Partikel enthält.

9. Verfahren nach einem der vorangehenden Ansprüche, wobei das Massenverhältnis E/C des Zementschlamms von 0,23 bis 2,0 inklusive beträgt.

10. Verfahren nach einem der vorangehenden Ansprüche, wobei der wässrige Schaum Wasser und ein Schaummittel umfasst.

## Claims

1. A Method for producing a mineral foam comprising the following steps:
(i) independently preparing a cement slurry and an aqueous foam, the cement slurry being prepared by mixing water W and cement C, the cement C comprising an amount x of soluble Na₂O equivalent, x being expressed in weight per 100 parts of cement, said slurry having a ratio x/(W/C) less than or equal to 1.75, with W/C expressed by weight, and the particles of cement C having a particle size distribution such that the ratio d_{max(h/2)}/d_{min(h/2)} of the particle size distribution is between 5 and 25;
(ii) contacting the cement slurry with the aqueous foam to obtain a slurry of foamed cement; and
(iii) forming the slurry of foamed cement obtained at step (ii) and leaving to set.

2. The method according to claim 1, wherein the ratio x/(W/C) is less than or equal to 1.60, preferably less than or equal to 1.50.

3. The method according to claim 1 or 2, wherein the ratio d_{max(h/2)}/d_{min(h/2)} is from 6 to 14.

4. The method according to any one of the preceding claims, wherein the cement is a cement of type CEM I, CEM II, CEM III, CEM IV or CEM V.

5. The method according to any one of the preceding claims, wherein the cement has a Blaine specific surface area of 3,500 to 10,000 cm²/g.

6. The method according to any one of the preceding claims, wherein the cement slurry comprises a water reducing agent of plasticizer or superplasticizer type.

7. The method according to any one of the preceding claims, wherein the mineral foam comprises a mineral addition.

8. The method according to any one of the preceding claims, wherein the mineral foam contains substantially no fine particles.

9. The method according to any one of the preceding claims, wherein the W/C weight ratio of the cement slurry ranges from 0.23 to 2.0.

10. The method according to any one of the preceding claims, wherein the aqueous foam comprises water and a foaming agent.
